# EUROPEAN PATENT APPLICATION

(11) **EP 4 610 960 A1**
(43) Date of publication of application: **03.09.2025**
(21) Application number: 24160446.1
(22) Date of filing: 29.02.2024
(51) Int. Cl.: G08G 1/16, G06F 30/20, G06N 3/044, G06N 3/045, G06N 3/08, G06V 10/82, G06V 20/56, G08G 1/01, G08G 1/00

(54) **METHODS AND SYSTEMS FOR PROVIDING DATA-INSIGHT FOR DEVELOPMENT OF AN AUTOMATED DRIVING SYSTEM**

(71) Applicant: Zenseact AB, 417 56 Göteborg (SE)
(72) Inventor: GYLLENHAMMAR, Magnus, 435 43 Pixbo (SE); HESS, Georg, 412 79 Göteborg (SE); TONDERSKI, Adam, 426 53 Västra Frölunda (SE)
(74) Representative: Zacco Sweden AB

(57) **Abstract**

A computer-implemented method (100) for providing data-insight for development of an automated driving system, ADS, of a vehicle. The method (100) comprising: obtaining (S102) sensor data pertaining to a driving scenario, said sensor data being captured by one or more sensors of the vehicle and depicting at least part of a surrounding environment of the vehicle; monitoring (S104) a fulfillment of one or more scenario triggers of the driving scenario, wherein fulfillment of the one or more scenario triggers is indicative of the driving scenario being a driving scenario of interest; in response to determining at least one of the one or more scenario triggers being fulfilled: generating (S106), by a description generator network, a scenario description, based at least on the obtained sensor data pertaining to said driving scenario and/or based on ADS data outputted from the ADS having processed said sensor data, wherein the scenario description comprises textual data about the driving scenario to which the obtained sensor data pertains; and storing (S108) the generated scenario description.

## Description

### TECHNICAL FIELD

The herein disclosed technology relates to the field of autonomous driving. In particular, but not exclusively, the herein disclosed technology relates to methods and systems for providing data-insight for development of an automated driving system.

### BACKGROUND

Vehicles which are equipped with an advanced driver-assistance systems (ADASs) and/or autonomous driving (AD) systems, collectively referred to herein as Automated Driving Systems (ADSs), generate huge amounts of sensor-related data as they are driven around. Data from real-life scenarios is critical in a data-driven development organization where the ADS performance scales with amount of data collected. Data relating to certain critical or otherwise valuable scenarios experienced by the vehicle is not only valuable for training the models used by the ADS, but also for identifying reasons behind, or better understanding the occurrence of such scenarios, which can be utilized in the further development of the ADS.

Current ADS solutions often rely upon data servers containing sensor data from a small amount of dedicated test vehicles collected in a limited time frame. These data collections therefore contain a very limited number of scenarios, and with ADS features continuously being developed and updated through Over-The-Air (OTA) updates, it is difficult to maintain adequate performance over time. Thus, it is envisioned that the next-generation of ADS solutions will be leveraged by continuously collecting data from the production fleet.

However, any data collection, such as accessing the data from an entire fleet of vehicles (i.e. production vehicles or customer vehicles) and transmitting the data to a centralized server is very costly and technically challenging due to storage limitations, bandwidth limitations, and the immense need of post-processing to extract the relevant datasets for each individual use-case. Moreover, data privacy is a further concern, meaning it can be subject to restrictions in certain countries, regulatory frameworks, and legislative areas. A problem can. arise when, e.g., the sensor data comprises sensitive information, and may forbid or limit upload and storage of such data. There is therefore a need for new and improved solutions for dealing with these aspects, in particular in cases where it is not viable to obtain all of the underlying sensor data pertaining to a certain scenario.

### SUMMARY

The herein disclosed technology seeks to mitigate, alleviate or eliminate one or more of the above-identified deficiencies and disadvantages in the prior art to address various problems relating to both technical constraints (bandwidth limitations, storage limitations, etc.) and data privacy considerations in the collection of data from a fleet of ADS equipped vehicles for evaluating and improving the performance of the ADS. In particular, this can be utilized for providing data-insight for the development of the ADS through event-recording, fleet-insight, or monitoring of scenarios of interest.

Various aspects and embodiments of the disclosed technology are defined below and in the accompanying independent and dependent claims.

According to a first aspect of the disclosed technology, there is provided a computer implemented method for providing data-insight for development of an automated driving system, ADS, of a vehicle. The method comprises obtaining sensor data pertaining to a driving scenario. The sensor data being captured by one or more sensors of the vehicle and depicting at least part of a surrounding environment of the vehicle. The method further comprises monitoring a fulfillment of one or more scenario triggers of the driving scenario. The fulfillment of the one or more scenario triggers is indicative of the driving scenario being a driving scenario of interest. The method further comprises, in response to determining at least one of the one or more scenario triggers being fulfilled, generating, by a description generator network, a scenario description, based at least on the obtained sensor data pertaining to said driving scenario and/or based on ADS data outputted from the ADS having processed said sensor data. The scenario description comprises textual data about the driving scenario to which the obtained sensor data pertains. The method further comprises storing the generated scenario description.

According to a second aspect of the disclosed technology, there is provided a computer program product comprising instructions which, when the program is executed by a computing device, causes the computing device to carry out the method according to any one of the embodiments of the first aspect disclosed herein. With this aspect of the disclosed technology, similar advantages and preferred features are present as in the other aspects.

According to a third aspect of the disclosed technology, there is provided a (non-transitory) computer-readable storage medium comprising instructions which, when executed by a computing device, causes the computing device to carry out the method according to any one of the embodiments of the first aspect disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a fourth aspect of the disclosed technology, there is provided a computing device for providing data-insight for development of an automated driving system of a vehicle, the computing device comprising control circuitry. The control circuitry is configured to obtain sensor data pertaining to a driving scenario. The sensor data being captured by one or more sensors of the vehicle and depicting at least part of a surrounding environment of the vehicle. The control circuitry is further configured to monitor a fulfillment of one or more scenario triggers of the driving scenario. Fulfillment of the one or more scenario triggers is indicative of the driving scenario being a driving scenario of interest. The control circuitry is further configured to, in response to determining at least one of the one or more scenario triggers being fulfilled, generate, by a description generator network, a scenario description, based at least on the obtained sensor data pertaining to said driving scenario and/or based on ADS data outputted from the ADS having processed said sensor data. The scenario description comprises textual data about the driving scenario to which the obtained sensor data pertains. The control circuitry is further configured to store the generated scenario description. With this aspect of the disclosed technology, similar advantages and preferred features are present as in the other aspects.

According to a fifth aspect, there is provided a vehicle equipped with an automated driving system. The vehicle comprises one or more sensors. The vehicle further comprises the computing device according to any one of the embodiments of the fourth aspect disclosed herein. With this aspect of the disclosed technology, similar advantages and preferred features are present as in the other aspects.

According to a sixth aspect, there is provided a system. The system comprises a fleet of vehicles equipped with an automated driving system, ADS, and a server communicatively connected to the fleet of vehicles. A vehicle of the fleet of vehicles comprises control circuitry configured to obtain sensor data pertaining to a driving scenario, said sensor data being captured by one or more sensors of the vehicle and depicting at least part of a surrounding environment of the vehicle. The control circuitry of the vehicle is further configured to monitor a fulfillment of one or more scenario triggers of the driving scenario, wherein fulfillment of the one or more scenario triggers is indicative of the driving scenario being a driving scenario of interest. The control circuitry of the vehicle is further configured to, in response to determining at least one of the one or more scenario triggers being fulfilled, generate, by a description generator network, a scenario description based at least on the obtained sensor data pertaining to said driving scenario and/or based on ADS data outputted from the ADS having processed said sensor data. The scenario description comprises textual data about the driving scenario to which the obtained sensor data pertains. The control circuitry of the vehicle is further configured to transmit the generated scenario description to the server. The server comprises control circuitry configured to receive the generated scenario description. The control circuitry of the server is further configured to store the generated scenario description. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that it may enable meaningful data collection also in situations where raw sensor data for some reason cannot be collected from the vehicles, by a remote server, e.g. due to transmission constraints, storage constraints, privacy constraints, etc.

An advantage of some embodiments is that privacy concerns and transmission limitations related to sharing sensor data from a fleet of vehicles can be circumvented. In other words, the data collection from ADS equipped vehicles may be rendered more secure from a data privacy and integrity perspective, as the generation (and subsequent use in the ADS development) of textual descriptions of scenarios (as opposed to raw sensor data) reduces the risk of sensitive data being collected and stored. If further means that the transmission can be made with data of less sensitive nature, and thus reduced risk of sensitive data being intercepted during transmission.

An advantage of some embodiments is that a dynamic stream of scenario/events messages, and continuous monitoring of these scenarios can be provided.

An advantage of some embodiments is that it can provide developers with accurate and easy to understand descriptions of critical (or otherwise relevant) scenarios experienced during operation of the vehicles, and for use in the continued ADS development.

An advantage of some embodiments is that it may increase user trust by enabling a more transparent ADS system.

An advantage of some embodiments is that collection of data from ADS equipped vehicles is rendered more efficient and cost effective.

An advantage of some embodiments is that the data collection from ADS equipped vehicles is rendered more bandwidth-efficient, in terms of more compressed data being transmitted.

An advantage of some embodiments is that insight into the fleet of ADS equipped vehicles is enabled with efficient utilization of processing, memory and transmission resources. Insight may in this case e.g. refer to insight into the performance of the fleet (or more specifically the ADS), insight into the inner workings of the ADS, insight into scenarios experienced by the fleet (e.g. what scenarios, or to what extent), insight into how these scenarios are dealt with, etc.

An advantage of some embodiments is that one no longer has to rely on special-purpose test vehicles to gain insight into the workings of the ADS since data collection from a large vehicle fleet (i.e. production fleet) is rendered possible, while considering the above-mentioned privacy and transmission constraints.

An advantage of some embodiments is that faster releases of performant and safe ADS functions are possible as compared to prior known solutions.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1A to 1C are schematic flowchart representations of a method for providing data-insight for development of an automated driving system, ADS, of a vehicle, in accordance with some embodiments.
Fig. 2 illustrates, by way of example, a computing device for providing data-insight for development of an automated driving system, ADS, of a vehicle, in accordance with some embodiments.
Fig. 3 is a schematic illustration of a vehicle in accordance with some embodiments.
Fig. 4 is a schematic illustration of a system in accordance with some embodiments.
Fig. 5 illustrates, by way of example, a process flowchart of the disclosed technology.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

### Overview

An imperative aspect of achieving reliable Automated Driving System (ADS) functionality for the vehicles of tomorrow is to obtain a comprehensive understanding of the scenarios occurring in the surrounding environment of the vehicle, as well as understanding how the vehicle (or its ADS) tackles the scenario. The unpredictable and dynamic scenarios including situations, events or objects in the surrounding environment of the vehicle and on the roads on which the vehicle is travelling can involve nearly endless varieties and complexities. In other words, there is a need for immense amounts of data (sensor data logged by vehicles) for achieving reliable autonomous functionality.

However, some of the challenges with collecting data from a fleet of vehicles for the purpose of testing, developing, and verifying ADS functions is that simply transmitting all of the data is unfeasible due to the immense need of bandwidth and transmission resources, and also due to the insurmountable post-processing task required to extract relevant data samples. A further aspect of this data collection is data privacy. Some sensor data can for instance comprise rich information about the environment, including details about other vehicles, pedestrians, and infrastructure. It can therefore comprise sensitive data which are subject to different regulatory frameworks or legislations in different countries, and which may need to be anonymized. One also needs to ensure that the data is protected transmitted and stored, e.g., through signal encryption.

Overall, addressing cost and data privacy concerns in autonomous vehicles requires a comprehensive approach that considers the ethical, legal, and technical aspects of data collection, storage, and usage. Implementing privacy-preserving technologies and adhering to strict regulatory frameworks is therefore of great importance.

Thus, it is desirable to enable data collection and providing data-insight through privacy-preserving technologies which at the same time offer effective data collection, transmission, and storage, as well as providing added value to the collected data. In providing innovative mobility solutions, all this is aimed at ensuring that autonomous vehicles respect individuals' privacy rights. Various aspects and embodiments disclosed herein aim to provide a solution to easily, effectively and securely, collect data for proving insight for the development of the ADS. To this end, the herein disclosed technology proposes a solution which leverages automatic generation of scenario descriptions for certain driving scenarios of interest.

At a core of the solution is, as realized by the inventors, the use of automatic generation of textual descriptions of the sensor data (or other data) for alleviating the limitations in data transmission and data privacy. The generated description may contain all the relevant information, although in a more compressed form. Moreover, it removes any potential sensitive information which e.g. may be depicted in image data captured by cameras of the vehicles. The principles disclosed herein can be used, e.g., when it is not possible (or not desirable) to transmit all of the data relating to the scenario (e.g. raw sensor data) e.g. due to bandwidth restrictions, privacy restrictions, or any other reason. In a larger perspective, e.g., if performed for a fleet of vehicles, the textual descriptions can further provide valuable information on a higher level, such as trends, similarities between how the ADS of different vehicles handle similar scenarios, for identifying certain aspects that needs further attention, etc. Moreover, it can provide e.g. developers with richer and more dynamic textual information of a scenario experienced by the vehicle, compared to just receiving (static) triggers such as "AEB activated", or "adaptive cruise control deactivated", which are commonly used today. Thus, the disclosed technology can provide a balance between low-level information (e.g. static triggers) and high-level information (e.g. raw sensor data). The former having the problem of containing too little information, and the latter having the problem of potentially comprising sensitive information, or being too large for continuously being transmitted from the vehicle.

In short, it is proposed to monitor a fulfillment of one or more scenario triggers being fulfilled in the vehicle. Upon fulfillment, a scenario description (i.e. a textual description of a scenario depicted in e.g. sensor data captured by sensors of the vehicle) can automatically be generated. This scenario description may then be used for understanding or analyzing the scenario, and replace the need for using all of the raw/original data. By instead using the textual description for development purposes, data can be transmitted in greater quantity, or at more occasions, without increasing the bandwidth requirements. Moreover, this data representation typically comprises less sensitive information than the original data. In addition, the generated scenario descriptions may serve to provide developers with additional information for e.g. better understanding what data is needed for further developing the ADS, and then to query for this data to be collected. Put differently, the generated scenario description may provide for monitoring of the fleet in order to obtain better insight into what is needed for the continued development process.

In some embodiments, the herein disclosed technology is based on the use of embeddings (although other ways are possible as well), which is a technique to express information as vectors, in something one can call a data space (or vector space, latent space, multi-dimensional (vector) space) and to then generate a textual description of the original data. Thus, some embodiments build upon the availability of embeddings-generators for mapping collected data to a representation in a latent space. This may unlock new functionalities which can aid in solving the above-mentioned problems. More specifically, the collected data can be encoded (e.g. by use of an embedding network) into a compressed representation (i.e. an embedding) in the vehicle. Another network (herein referred to as description generator network) may be used to decode the embedding into textual data forming a textual description of the original data. The relevant information of the original data can be transferred to the description by having the embedding network and description generator network relating to the same latent space. The generated description may still comprise the general information of the original data needed for use e.g. in ADS development, while the more specific and sensitive information is suppressed (and in some sense lost) in the encoding-decoding process. Thereby the sensitive and data bandwidth problems can at least partly be overcome.

Embedding networks (artificial neural networks trained to generate a representation of the input in the data space), are herein deployed on vehicle sensor data (sensor output), or any intermediate outputs (such as data outputted from the ADS e.g. after having processed the sensor data), and optionally on other data as well, and a description generator network (artificial neural networks trained to generate textual data from said representations of the original data in the data space) is used to automatically generate scenario descriptions. The embedding networks and description generator network are proposed to be trained in association with each other, such that they relate to the same data space. Points is this shared data space maps towards a certain contextual, spatial and/or temporal meaning and allows this meaning to be transferred from the original data and the generated scenario description.

### Definitions

In the present context, an "Automated Driving System" ("ADS") refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that the distinction between ADAS and AD lies in the level of autonomy and control. ADAS systems are designed to aid and support drivers, while an AD aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

The term "perception data" refers to the information gathered by sensors and other technologies that are used by ADS-equipped vehicles to detect and interpret their environment. This includes data collected from cameras, lidar, radar, and other sensors that help the vehicle "perceive" its surroundings and make decisions based on that information. The perception data collected by the vehicle may include the position, speed, and direction of nearby objects, position and type of road markings, position and type of traffic signs, and other relevant information. This data may then be processed by the vehicle's onboard computer to help it make decisions on steering, acceleration, braking, and other actions necessary to safely navigate the environment. Accordingly, the term "perception" data may refer to "surroundings assessment" data, "spatial perception" data, "processed sensory" data and/or "temporal dependencies" data, whereas perception "data" may refer to perception "information" and/or "estimates". The term "obtained" from a perception module or perception system, on the other hand, may refer to "derived" from a perception model and/or "based on output data" from a perception module or system. Whereas perception module/system configured to "generate the set of perception data" may refer to perception module/system adapted and/or configured to "estimate the surroundings of said vehicle", "estimate at least a portion of surroundings of said vehicle", "determine surroundings of said vehicle", "interpret sensory information relevant for the autonomous maneuvering of said vehicle", and/or "estimate surroundings of said vehicle and make model predictions of future states of the surroundings of said vehicle".

In the present context, a "sensor" or "sensor device" refers to a specialized component or system that is designed to capture and gather information from the vehicle's surroundings. It may further refer to components for gathering information of the vehicle itself. These sensors play a crucial role in enabling the ADS to perceive and understand their environment, make informed decisions, and navigate safely. Sensors are typically integrated into the autonomous vehicle's hardware and software systems to provide real-time data for various tasks such as obstacle detection, localization, road model estimation, and object recognition. Common types of sensors used in autonomous driving include LiDAR (Light Detection and Ranging), Radar, Cameras, Ultrasonic sensors, inertial measurement unit (IMU), GPS, wheel speed sensors etc. LiDAR sensors use laser beams to measure distances and create high-resolution 3D maps of the vehicle's surroundings. Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects. Various machine learning algorithms (such as e.g., artificial neural networks) may be employed to process the output from the sensors to make sense of the environment.

In the present context, the term "data sample" refers to a subset of data taken from a larger dataset or data stream. In particular, the "data samples" may be collected by sampling data output by a sensor of the vehicle or other sources (e.g., outputs from various functions of the ADS). The data may be sampled with a suitable sample rate given the size of dataset. For example, the data may be sampled with 0,1 second intervals, 0,5 second intervals, 1 second intervals, or the like. In some examples, the data samples include "sensor data samples". The data sample may be used for development of the ADS. For example, a data sample may be annotated, and used in training of a machine learning model used as part of the ADS.

The data sample may be a sample of sensor data, also referred to as a "sensor data sample". The sensor data sample may be interpreted as a specific instance or set of data collected by the sensors installed on the ADS-equipped vehicles at a particular moment in time or within a specific timeframe. The sensor data samples typically comprise various types of information captured by the sensors, such as camera images, lidar output, radar output, GPS coordinates, accelerometer readings, and other sensor-generated data. The "sensor data samples" may include connected meta data (e.g., timestamps, location information, vehicle information, log duration, etc.). A data sample of sensor data (or sensor data sample) may, e.g. correspond to an image frame from a camera, or a lidar point-cloud for a certain point in time.

The wording "network", as in "embedding network", or "description generator network", (may also be referred to as machine-learning algorithm, machine learning model, (artificial) neural network, deep learning network and so forth) herein refers to any computational system or algorithm that is trained on data to make predictions, decisions or otherwise generate an output, e.g. by learning patterns and relationships from training data and applying that knowledge on new input data.

Neural networks or artificial neural networks, emulate computing systems inspired by biological neural networks found in the brains of living creatures. These systems exhibit learning capabilities, progressively enhancing their performance without requiring task-specific programming. For instance, in image recognition, a neural network can be trained to detect specific objects within images by analyzing labelled example images. Once it grasps the correlation between objects and their names, it can apply this knowledge to identify similar objects in unlabeled images.

Fundamentally, a neural network consists of interconnected units known as neurons, connected by synapses that transmit signals of varying strengths. These signals travel unidirectionally, activating receiving neurons based on the strength of these connections. The combined incoming signals, originating from multiple transmitting neurons can then be fed to a receiving neuron which activates and transmits a signal to downstream neurons. This activation strength becomes a crucial parameter governing signal propagation within the network. Different activation functions can be used, such as continuous activation function (e.g. sigmoid), or partially continuous activation functions (e.g. ReLU).

Moreover, during the training of a neural network architecture, regression-comprised of statistical processes for understanding variable relationships-can involve minimizing a cost function. This function gauges the network's performance in accurately linking training examples to their intended outputs. A technique called backpropagation can then be employed. Backpropagation, a widely used method for training artificial neural networks, collaborates with optimization methods like stochastic gradient descent (SGD).

Moreover, use of backpropagation can include propagation and weight update. Backpropagation involves two key steps: propagation and weight adjustment. When an input enters the neural network, it moves forward through each layer until it reaches the output layer. Here, the neural network's output is measured against the desired output using a cost function, generating an error value for each output node. These errors then flow backward, starting from the output layer, assigning error values to each node based on its contribution to the final output. These error values are pivotal-they aid in computing the cost function's gradient concerning the neural network's weights. This gradient guides the selected optimization technique, adjusting the weights to minimize the cost function.

More specifically, the term embedding network (may also be referred to as "encoding network", "embedding neural network", or "embedding artificial neural network") refers to a computational model or set of techniques that are used to enable a computer to generate an embedding for input data (e.g. sensor data, ADS data, etc.), where an "embedding" may be understood as a mathematical representation of said input data. In more detail, the "embedding network" is used to transform high-dimensional data into a lower-dimensional space (multi-dimensional (vector) space) while preserving meaningful relationships between the input data points.

Embedding networks are for example used for tasks like natural language processing (NLP) and computer vision. These networks take raw input data, such as words in a sentence or pixels in an image, and convert them into fixed-size, numerical vectors (embeddings) that capture essential characteristics or features of the input data. In more detail, in NLP, the embedding networks convert words into numerical vectors, where words with similar meanings or contextual usage are represented closer to each other in the embedding space (or multi-dimensional space). Similarly, in computer vision, the embedding networks convert images to numerical vectors, enabling the network to understand visual similarities, like grouping similar objects or scenes closer together in the embedding space (multi-dimensional (vector) space).

The embedding network itself may comprise layers of neural network architecture, often employing techniques like convolutional layers, recurrent layers, fully connected layers, attention layers, or transformer layers to learn and extract meaningful patterns from the input data. The encoding networks may be trained through processes like supervised learning, unsupervised learning, or self-supervised learning to optimize the embeddings for specific downstream tasks, such as classification, clustering, or recommendation.

In some embodiments, the various embedding networks are trained to generate embeddings in the same embedding space (the same multi-dimensional space or the same multi-dimensional vector space) so that embeddings (generated by different embedding networks) that are contextually, spatially and/or temporally related point towards the same point within the multi-dimensional space. The term "point towards the same point within the multi-dimensional space" should in the present context be interpreted broadly, and encompass "point in substantially the same direction within the multi-dimensional space" or "point towards substantially the same point within the multi-dimensional space" and so forth. In more detail, having two embedding vectors pointing towards the same point or in the same direction, one can infer a relationship between the two underlying data samples. For example, if one has two embedding vectors, one can calculate how close they are to pointing towards the same point or how close they are to pointing in the same direction in order to determine a relationship between the underlying data samples, where the closer they are to pointing towards the same point or the same direction, the more likely it is that the underlying data samples relate to the same object or scene.

This may for example be done by training a first embedding network, to generate embeddings in a multi-dimensional space, based on input data from a first data source. Then, each of the other embedding networks are trained "against" or in association with the first embedding network (or any of the other embedding networks one trained) so that the embeddings of the other networks that are contextually, spatially and/or temporally related with the embeddings of the first embedding network point towards the same point within the multi-dimensional space as the related embeddings of the first embedding network. For example, if the first embedding network can be trained to generate image embeddings for camera images and a second embedding network is intended to generate embeddings for LiDAR data, then the second embedding network may be trained by feeding the second embedding network with lidar data of a scene where corresponding image embeddings (of that scene) will be used as basis for forming a ground-truth (desired output). By doing this process for each subsequent embedding network, one may obtain a set of embedding networks capable of ingesting outputs from various data sources and output corresponding embeddings where contextual, spatial and/or temporal relations are represented by the proximity or similarly in direction of the embeddings (vectors) in the multi-dimensional space.

The description generator network refers to a computational model or set of techniques that are used to enable a computer to generate text data from data inputted to the network, which describes any aspect of the input data, such that its visual content, what it depicts, etc. The input data may e.g. be sensor data (e.g. image data, LiDAR data, radar data, etc.), ADS data, or any other form of data. The description generator network may e.g. be CNN-LSTM model which combines a Convolutional Neural Network (CNN) for image feature extraction, and a Long Short-Term Memory (LSTM) network for sequential language generation. The CNN is then used to extract visual features from the image, and the LSTM is used to generate a description word by word based on those features. In another example, an Encoder-Decoder architecture can be used. This architecture consists of an encoder network, typically a CNN, to extract image features, and a decoder network, e.g. an RNN (Recurrent Neural Network), to generate descriptions based on those features. In another example, transformer-based architectures, such as the Transformer architecture itself, or its variants like BERT (Bidirectional Encoder Representations from Transformers) and GPT (Generative Pre-trained Transformer), can also applied for description generation tasks. These models leverage self-attention mechanisms to capture dependencies between words in the caption and to integrate information from the image.

In some embodiments, the description generator network is trained to process embeddings (e.g. sensor data embeddings, ADS data embeddings, trigger embeddings, etc.) and output a corresponding scenario description for the driving scenario to which the sensor data pertains. The description generator network may in such case comprise a decoding part, and a generative part, as will be further described below in connection with Fig. 6.

An embedding network and the description generator network may be trained in association with each other. Thereby, they can be trained so as to relate to the same multi-dimensional space. How the one or more embedding networks, and description generator network are trained, will be further described below in connection with the description of some example embodiments.

As used herein, the term "in response to" may be construed to mean "when or "upon" or "if" depending on the context. Similarly, the phrase "in response to [determining at least one of the one or more scenario triggers] being fulfilled" may be construed to mean "when it is determined that at least one scenario trigger is fulfilled" or "in an instance of fulfilment of at least one scenario trigger" "upon determining a fulfilment of at least one scenario trigger" or "upon detecting and identifying occurrence of an event fulfilling at least one scenario trigger" or "in response to detecting occurrence of an event fulfilling at least one scenario trigger", depending on the context.

### Embodiments

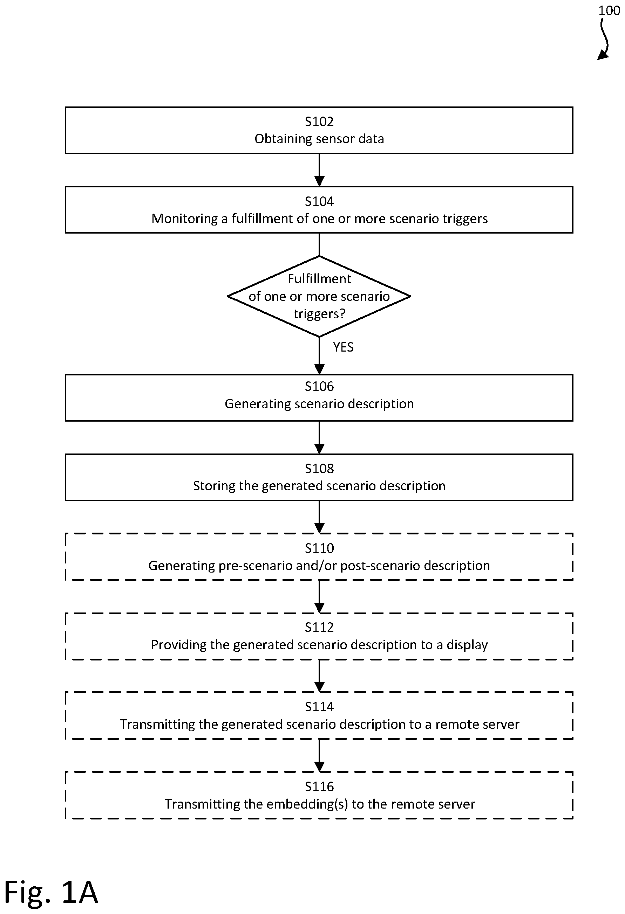

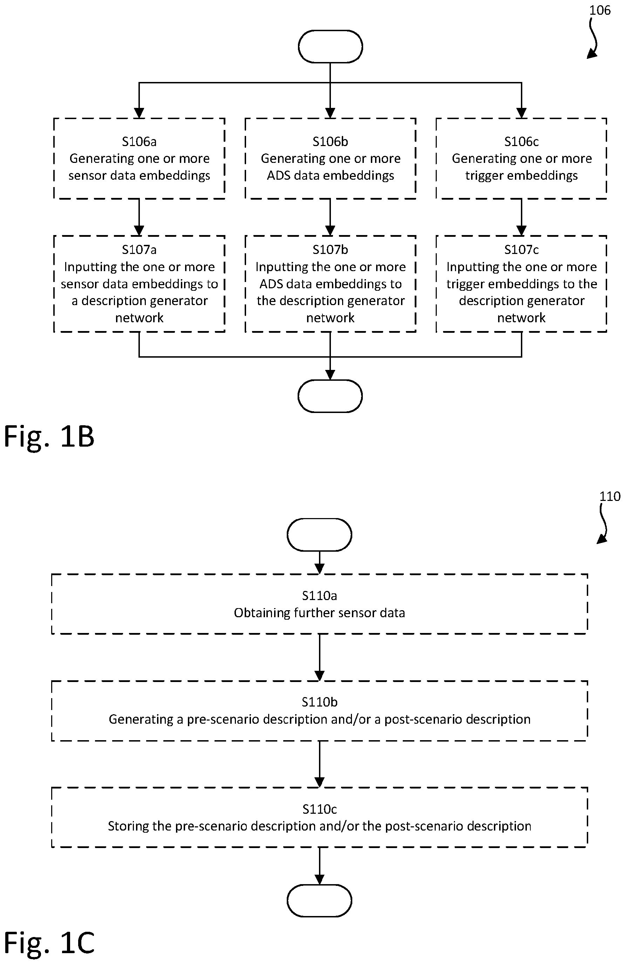

Figure 1A to 1C together illustrates a schematic flowchart representation of a method 100 in accordance with some embodiments. More specifically, a method 100 for providing data-insight for development of an automated driving system, ADS, of a vehicle. Put differently, the method 100 may be a method for providing a dynamic stream of scenario/events messages, and/or continuous monitoring of these scenarios. Fig. 1B illustrates a number of optional sub-steps to the step denoted S106 in Fig. 1A. Similarly, Fig. 1C illustrates a number of optional sub-steps to the step denoted S110 in Fig. 1A.

The method 100 is preferably a computer-implemented method, performed by a processing system of a vehicle. The processing system may for example comprise one or more processors and one or more memories coupled to the one or more processors, wherein the one or more memories store one or more programs that perform the steps, services and functions of the method 100 disclosed herein when executed by the one or more processors. It is however to be appreciated that the steps of the method may be distributed over two or more processing systems, such as between a vehicle and a server (may also be referred to as remote server, cloud server, central server, back-office server, fleet server, or back-end server), which will be further elaborated upon herein.

Below, the different steps of the method 100 are described in more detail. Even though illustrated in a specific order, the steps of the method 100 may be performed in any suitable order as well as multiple times. Thus, although Fig. 1A to 1C may show a specific order of method steps, the order of the steps may differ from what is depicted. In addition, two or more steps may be performed concurrently or with partial concurrence. For example, the steps denoted S106a-106c, as well as the steps denoted S107aS107c may be performed concurrently, in any order or at any point in time, based on a specific realization. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The herein described embodiments are only given as examples and should not be limiting to the present invention. Other solutions, uses, objectives, and functions within the scope of the invention as claimed below described patent claims should be apparent for the person skilled in the art. It should be appreciated that the steps which are comprised in dashed lines in Fig. 1A to 1C are examples of a number of optional steps which may form part of a number of alternative embodiments. The optional steps need not be performed in order. Furthermore, it should be appreciated that not all of the optional steps need to be performed.

The method comprises obtaining S102 sensor data pertaining to a driving scenario. The sensor data having been captured by one or more sensors of a vehicle and depicting at least part of a surrounding environment of the vehicle. In some embodiments, obtaining S102 the sensor data comprises collecting the sensor data from a received sensor data stream that is output from the one or more sensors of the vehicle. In another example, the sensor data is retrieved from a storage or data buffer in which the sensor data is stored. The data buffer may be of a suitable size or length depending on specific realizations. In more detail, the sensor data buffer may be of any size deemed suitable, e.g. in consideration of data capacity restraints and/or characteristics of the sensor data samples, and may for instance range from under a second up to several minutes, or more preferred, from a few seconds up to less than a minute. For example, the data buffer may be configured to store 5 to 20 seconds of the sensor data stream (that is sampled with a set sample rate such as e.g., 10 Hz, 20 Hz, 30 Hz, 40 Hz, etc.), in a First-In First-Out (FIFO) arrangement. However, in some embodiments the data buffer may be configured to store between 30 seconds and 60 seconds of the sensor data stream. This may provide the advantage of being able to capture an entire scenario's development over time.

In general, the term "obtaining" as used herein, is to be interpreted broadly and encompasses receiving, retrieving, collecting, acquiring, and so forth directly and/or indirectly between two entities or components configured to be in communication with each other or further with other external entities. However, in some embodiments, the term "obtaining" is to be construed as determining, deriving, forming, computing, etc.

In the context of the present disclosure, the wording "driving scenario" (or just "scenario") is to be construed as a specific set of conditions, events, or circumstances that a vehicle may encounter while navigating on the road. This includes various factors such as traffic patterns, road conditions, weather conditions, pedestrian behavior, and interactions with other vehicles.

Each driving scenario can present unique challenges that the autonomous driving system must be capable of recognizing and appropriately responding to in order to ensure safe and efficient operation. Development and testing of autonomous driving systems typically involve exposing the system to a wide range of driving scenarios to validate its performance under diverse conditions and to improve its ability to handle real-world situations effectively.

A (driving) scenario of interest can thus be a scenario relevant for the further development of the ADS (e.g. rare scenario, safety critical scenarios, scenarios in which the ADS performance is below what is desired, etc.), or otherwise relevant for collecting information of. A scenario trigger (further explained below) may for this reason be used as a condition on which the generation of the scenario description is triggered.

The sensor data may pertain to the driving scenario in the sense that it depicts, or in any other way describes, any aspect(s) the driving scenario. The sensor data may comprise various types of information captured by one or more sensors of the vehicle (i.e. different sensor data types), such as camera images, lidar output, radar output, GPS coordinates, accelerometer readings, and other sensor-generated data. A sensor data type may also encompass sensor data from different instances of the same sensor type. For example, one sensor data type may be image data from a first camera having a first field of view, while a second sensor data type may be image data from a second camera having a second field of view.

The sensor data may comprise both data depicting the surrounding environment and associated meta data. The meta data may e.g. comprise timestamps, location information, vehicle information, log duration, etc. The surrounding environment of a vehicle is herein to be understood as a general area around the vehicle in which objects (such as other vehicles, landmarks, obstacles, etc.) can be detected and identified by vehicle sensors (RADAR, LiDAR, cameras, etc.), i.e. within a sensor range of the vehicle. Thus, the sensor data may give information about the position of other vehicles, pedestrians, obstacles, road conditions, and more. It may further give information about the direction of the lane or road in which the vehicle is travelling. It is to be appreciated that the principles of the present technology can also be applied to sensor data depicting an interior of the vehicle. E.g. as part of a driver monitoring system.

In some embodiments, the obtained sensor data comprises at least two sensor data types. As an example, two or more of image data, LiDAR data, radar data, and ultrasonic data. By using at least two sensor data types, the subsequent generation of a scenario description (further explained below) can be improved.

The method 100 further comprises monitoring S104 a fulfillment of one or more scenario triggers of the driving scenario. Fulfillment of the one or more scenario triggers is indicative of the driving scenario being a driving scenario of interest. The one or more scenario triggers (or criticality metrics) can be seen as a set of rules or conditions which can be used to define a driving scenario being of relevance. In general, fulfillment of the scenario triggers may be based on monitoring of external parameters of the surrounding environment or of internal parameters of the vehicle. For example, a scenario trigger may relate to the detection of an activation of a certain system in the vehicle, such as an emergency brake system, or a collision avoidance system. In another example, a scenario trigger may relate to the detection of a certain motion of the vehicle (e.g. certain steering maneuvers, motion of the vehicle in the lateral and/or longitudinal direction, etc.).

In some embodiments, the scenario trigger may be based on the obtained sensor data. More specifically, determining the fulfilment of the one or more scenario triggers of the driving scenario may be based on the sensor data depicting at least part of the surrounding environment of the vehicle. The sensor data may e.g. be processed by functions of the ADS (such as a perception model), and determining a fulfillment of the one or more scenario triggers based on an output of such functions. As an example, a scenario trigger may be fulfilled upon detecting brake light of a vehicle in front being activated. In another example, a scenario trigger may be fulfilled upon detecting the presence of certain objects (e.g. pedestrians or other vulnerable road users) ahead of the vehicle.

Moreover, the scenario triggers can be query based. More specifically, the vehicle may obtain a query indicative of what type of scenario(s) is to be collected. In case of using embeddings, the query can be in the form of a query embedding. The query embedding may be a representation of the desired scenario in the multi-dimensional space. Determining the scenario trigger as fulfilled may then be based on a similarity comparison between the embeddings generated based on the sensor data, or ADS output, and the obtained query embedding.

Alternatively, or in combination, the one or more scenario triggers may be based on monitoring of the driver (e.g. by a driver monitoring system, DMS). The driver monitoring may e.g. be based on sensor data pertaining to the driver of the vehicle, such as from one or more cameras focused on the driver. Images of the driver's face can be used to determine various facial characteristics of the driver including the position, orientation, and movement of the driver's eyes, face and head. The driver monitoring system may further derive a state of the driver based on the determined facial characteristics, such as e.g., if the driver is in an attentive or inattentive state, if the driver is tired, if the driver is drowsy, and so forth.

In some embodiments, the one or more scenario triggers are based on one or more internal states of the vehicle. More specifically, determining the fulfilment of the one or more scenario triggers of the driving scenario may be based on one or more internal states of the vehicle at a time of occurrence of the driving scenario. The internal states of the vehicle may for example encompass an Autonomous Emergency Braking (AEB) intervention, time-to-collision below exceeding a threshold value, detecting a critical maneuver (either by the driver or by the ADS), loss of grip, internal sensor measurements such as speed/acceleration, driver parameters (e.g. from the DMS) etc. The internal states of the vehicle may further comprise diagnostics of internal systems and sensors of the vehicle, such as detecting an overexposure of a camera.

In some embodiments, the scenario trigger can be a time-based trigger. As an example, the scenario trigger may define a certain interval at which a scenario should be recorded and processed. This may provide for continuous reports of what the vehicle experiences and does, and continuous observation of the fleet (i.e. providing fleet-insight). This can be enabled by the proposed solution of generating scenario descriptions, as it may not be viable to do the same, with the same frequency, if transmitting raw sensor data.

In some embodiments, the scenario trigger can be based on one or more external states. The external states may e.g. encompass weather forecasts, communication from other vehicles or infrastructure (i.e. V2X communication) indicating e.g. a traffic jam, etc.

It goes without saying that the one or more scenario triggers may be formed of any number and any combination of the above-mentioned example triggers, and are not limited to those. Moreover, depending on a specific realization, either all, or a defined subset of the one or more scenario triggers need to be fulfilled for proceeding to the next step of the method 100. However, in the broadest sense, at least one scenario trigger has to be fulfilled. In the following, it will be made clear that the fulfillment of at least one scenario trigger can be used as a condition for generating S106 a scenario description. It is however to be noted that the conditioning based on the fulfillment of the scenario triggers can be applied to other steps as well, depending on a specific realization. For example, the storing S108, provision S112, or transmission S114 (further explained below) of the scenario description, may be performed in response to the fulfillment of the at least one of the one or more scenario triggers, rather than the generation S106 of the scenario description. In such case, fulfillment of a scenario trigger of the one or more scenario trigger can be based on the contents or the meaning of the scenario description. For example, if the scenario description comprises some relevant data, the scenario description can be transmitted to a remote server.

In response to determining at least one of the one or more scenario triggers being fulfilled, the method 100 further comprises generating S106, by a description generator network, a scenario description, based at least on the obtained sensor data pertaining to said driving scenario and/or based on ADS data outputted from the ADS having processed said sensor data. The description generator network may be trained to process sensor data and/or ADS data, and to output a corresponding scenario description. Thus, generating S106 the scenario description may comprise inputting the sensor data and/or the ADS data to the description generator network.

By using both sensor data and ADS data (e.g. perception output), the generated description can reflect both what is actually present in the surrounding environment, as how the ADS has interpreted the situation and what it sees. Misalignment between this data can often be the cause for potential errors or shortcomings of the ADS, and any deviations are therefore of great importance for the continued development of the ADS. However, both the sensor data and the ADS data can, on its own, provide valuable insight for the ADS development.

The scenario description comprises textual data about the driving scenario to which the obtained sensor data pertains. The scenario description can be seen as an event message of what happens in the vehicle and/or what happens around the vehicle. The scenario description may thus in some way correspond to or represent the original sensor data for which the scenario description was generated, but in the form of textual data. In other words, the scenario description may constitute a description of what happens in a scenario depicted by the original sensor data (e.g. image/video captioning), or of any decisions (and reasons thereof) taken by the ADS of the vehicle. The textual description may, as described above, be generated by use of any suitable machine learning technique, such as transformer models, Generative Adversarial Networks, etc. As an illustrative example, the scenario description may say something like *"AEB activated; Cyclist entering current path of vehicle".* It is to be noted that the scenario description may further comprise pre-defined text data. In other words, a part of the scenario description may be text generated by the description generator network, while another part is constructed of pre-defined text. In the example above for instance, the string *"AEB activated"* can be a pre-defined text selected based upon a certain scenario trigger being fulfilled (e.g. AEB activation). The string *"Cyclist entering current path of vehicle"* may then constitute text data generated from the description generator network.

The scenario description may be further generated S106 based on other vehicle data, such as data from a CAN (Controller Arena Network) bus. CAN-bus data may e.g. comprise information about internal sensor data of the vehicle (such as data from an inertial measurement unit, speed, wheel rotation, temperature, etc.), control commands (such as commands for controlling actuators or systems such as throttle control, braking, steering, and transmission), diagnostic information (e.g. data related to the health and status of various vehicle systems), etc. Thus, the description generator network may further take e.g. CAN bus data as input, and generate the scenario description further based on this data. The use of CAN-like data may provide for better insight into the scenario, as this data can reflect unusual activity throughout the vehicle that may further explain the situation or the potential unfolding of the situation.

As explained in the foregoing, the ADS data may be data outputted from an ADS feature or function. In other words, the ADS data may be seen as data output from the ADS by processing the sensor data, or any additional data inputted to the ADS. The ADS data may e.g. comprise a perception output of a perception module of the ADS. I.e. the ADS data may comprise perception data. Thus, the description generator network may be fed by information pertaining to what objects have been detected in the surrounding environment, and how these relate to the ego-vehicle (i.e. the vehicle having collected the sensor data). The ADS may further comprise data pertaining to an output of a path planning module, a decision and control module, a safety system (e.g. comprising a risk map assessment), etc. Thus, the ADS data may comprise data obtained from processing perception data by some downstream module or function of the ADS. A combination of any of these ADS outputs may provide even more valuable information for the ADS development.

Turning now the attention to Fig. 1B, which illustrates, in more detail, some optional aspects and principles of the step of generating S106 the scenario description. These sub-steps of the step denoted S106, will in the following will be described in more detail.

Generating S106 the scenario description may comprise generating S106a one or more sensor data embeddings for the obtained sensor data pertaining to said driving scenario. The sensor data embeddings may be generated by processing the sensor data through one or more sensor data embedding networks that have been trained to process sensor data and to output a corresponding sensor data embedding in a multi-dimensional space. As previously described, an embedding is a representation of the original data in a multi-dimensional space. Sensor data embeddings are thus to be seen as embeddings generated for sensor data.

In some embodiments, each sensor data embedding of the one or more sensor data embeddings corresponds to a respective sensor data type of one or more sensor data types. Thus, the one or more sensor data embeddings may be representative of sensor data of equally many sensor data types. As a non-limiting example, the one or more sensor data embeddings may comprise a first sensor data embedding generated for image data captured by a camera, and a second sensor data embedding generated for lidar data captured by a LiDAR sensor. It is to be appreciated that any number of sensor data embeddings may be obtained, as well as for any combination of sensor data types.

The one or more sensor data embedding networks may comprise a plurality of sensor data embedding networks including one sensor data embedding network for a corresponding sensor data type of the vehicle. Put differently, each embedding network of the plurality of embedding networks may represent a respective/corresponding sensor data type of the one or more sensor data types. In other words, in some embodiments, the sensor data represented by the one or more sensor data embeddings comprise sensor data output by two or more different sensors of the vehicle, and accordingly two or more corresponding embedding networks in a one-to-one ratio (i.e., each embedding network is related to one specific sensor (e.g. first camera, second camera, lidar sensor, radar, etc.) of the vehicle).

Moreover, the plurality of sensor data embedding networks comprises a first sensor data embedding network trained to process a first sensor data type and to output a corresponding sensor data embedding (for each sensor data sample of the first sensor data type), and a second sensor data embedding network trained to process a second sensor data type and to output a corresponding sensor data embedding. The first and second sensor data types may be different sensor data types. The first sensor data embedding network being trained in association with the second sensor data embedding network such that a sensor embedding generated by the first sensor data embedding network and a sensor embedding generated by the second sensor data embedding network point towards the same point within the multi-dimensional space when the two-sensor data embeddings are contextually, spatially and/or temporally related. Thus, each type of the sensor data of being embedded into the one or more embeddings are all encoded into the same multi-dimensional space.

In some embodiments, each of the other embedding networks (i.e., the second embedding network for a second sensor data type (or a second sensor), a third embedding network for a third sensor data type (or a third sensor), etc.) can be trained in association with the first embedding network such that a sensor data embedding generated by the first embedding network and a sensor data embedding generated by each of the other embedding networks point towards the same point within the multi-dimensional space when the two-sensor data embeddings are contextually, spatially and/or temporally related.

Thus, in some embodiments, each embedding network may be configured to generate sensor data embeddings for a respective sensor data type. It is to be appreciated that the plurality of embedding networks may comprise any number of embedding networks, depending on a specific implementation. Thus, the plurality of embedding networks may further comprise a third embedding network, a fourth embedding network, etc. The plurality of embedding networks may all be trained together, in association with each other. Alternatively, the second embedding network, the third embedding network, and the fourth embedding network (and so on), may all be trained in association with the first embedding network. In another example, the second embedding network may be trained in association with the first embedding network, as stated above. The third embedding network may in turn be trained in association with the second embedding network. And the fourth embedding network may be trained in association with the third embedding network, and so forth.

Alternatively, or in combination, the one or more embedding networks may comprise a fused embedding network trained to process fused sensor data. The fused sensor data may comprise a fusion of at least two sensor data types. Put differently, the fused sensor data may comprise at least two sensor data types of the one or more sensor data types. The fused encoding network may be trained to process at least two sensor data types, and output a sensor data embedding for each of the at least two sensor data types. The fused sensor data may comprise the at least two sensor data types individually, or processed to form a fused or combined sensor data type. In the latter case, a sensor data embedding representative of the combined sensor data type may be output, rather than one for each sensor data type respectively.

Generating S106 the scenario description may further comprise inputting S107a the one or more sensor data embeddings to the description generator network having been trained to process sensor data embeddings and output a corresponding scenario description for the driving scenario to which the sensor data pertains. The description generator network having been trained in association with at least one of the one or more sensor data embedding networks so as to relate to the same multi-dimensional space. The description generator network being trained in association with the at least one sensor data embedding network, may be construed as the description network being trained so as to understand the multi-dimensional space of the embedding networks. E.g. so that it can interpret the contextual, spatial, and/or temporal meaning of a point in the multi-dimensional space. The description generator network may be trained jointly with an embedding network, or separately, but still conditioned on (i.e. in awareness of) the embedding network. The description generator network having been trained in association with at least one of the one or more sensor data embedding networks is therefore to be interpreted broadly and may encompass any training procedure allowing the description generator network and the at least one sensor data embedding network to relate to the same multi-dimensional space.

In some embodiments, generating S106 the scenario description further comprises generating S106c one or more trigger embeddings for the at least one scenario trigger being fulfilled. The one or more trigger embeddings may be generated by processing each fulfilled scenario trigger through a trigger embedding network having been trained to process scenario triggers and to output a corresponding trigger embedding in the multi-dimensional space. The multi-dimensional space being the same as the multi-dimensional space of the one or more sensor data embedding networks. The trigger embedding network being trained in association with at least one of the one or more sensor data embedding networks so as to relate to the same multi-dimensional space. The trigger embedding network being trained in association with at least one sensor embedding network is to be interpreted broadly, and may encompass training the networks jointly, or at separate instances while one of the networks is aware of the other already being trained.

Generating S106 the scenario description may further comprise inputting S107c the one or more trigger embeddings to the description generator network. Thereby, also information about the scenario triggers being fulfilled can be included in the scenario description.

In some embodiments, generating S106 the scenario description comprises generating S106b one or more ADS data embeddings from the ADS data. The one or more ADS data embeddings being generated by processing the ADS data through one or more ADS data embedding networks having been trained to process ADS data and to output a corresponding ADS data embedding in a multi-dimensional space. The one or more ADS data embedding networks may be trained in association with each other. Moreover, the one or more ADS data embedding networks may be trained in association with at least one of the one or more sensor data embedding networks, so as to relate to the same multi-dimensional space. Thereby, an ADS data embedding of an ADS data sample that is contextually, spatially and/or temporally related to a specific sensor data sample points towards the same point as the sensor data embedding of that sensor data sample within the multi-dimensional vector space.

Generating S106 the scenario description may further comprise inputting S107b the one or more ADS data embeddings to the description generator network having been trained to process ADS data embeddings and output a corresponding scenario description for the driving scenario. The description generator network has been trained in association with at least one of the one or more ADS data embedding networks so as to relate to the same multi-dimensional space.

It is to be noted that the scenario description may be generated based on any combinations of sensor data embeddings, ADS data embeddings, and trigger embeddings. Moreover, any aspects or principles mentioned in connection with the generation of one of the embedding types, are applicable also to the other embedding types, unless otherwise stated.

The method 100 further comprises storing S108 the generated scenario description. The scenario description may be stored S108 in a data buffer until further processing.

The method 100 may further comprise transmitting S114 the generated scenario description to a remote server. In some embodiments, the method 100 may further comprise transmitting information pertaining to internal states of the vehicle, and/or other vehicle data, to the remote server.

The method may further comprise transmitting S116 the one or more embeddings (i.e. sensor data embeddings, ADS embeddings, and/or trigger embeddings) to the remote server. Transmitting the one or more embeddings may be performed in response to receiving a request from the remote server. Alternatively, or in combination, the one or more embeddings may be transmitted to the remote server in view of the fulfillment of the one or more scenario triggers (e.g. in view of which scenario triggers are fulfilled). The one or more embeddings may later be processed in the server for generating synthetic data representative of the original data having been embedded. By transmitting both the scenario description and underlying the one or more embeddings, an effective event recording can be achieved.

The stored, and later transmitted, scenario description be used for further development of the automated driving system. For example, the scenario description can be used as insight into the workings of different ADS functions such as perception functions (e.g., object detection, object classification, semantic segmentation, free-space estimation, object tracking, etc.), path planning functions (e.g., candidate paths, executed paths, etc.), trajectory planning functions (e.g., candidate trajectories, executed trajectories, etc.), road model generation functions, localization functions, safety function output (e.g., Minimum Risk Maneuver (MRM) execution, collision avoidance execution, etc.) and so forth, and how these might be improved. It may also give insight into what different scenarios or scenes the vehicles experience, how these are handled by the ADS, and how well it performs.

The method 100 may further comprise providing S112 the generated scenario description to a display of the vehicle. In other words, the scenario description may be presented to an occupant of the vehicle. This may be advantageous in that a user's trust of the ADS can be improved, by presenting the system's view of the scenario.

As shown in Fig. 1A, the method 100 may further comprise the optional step of generating S110 a pre-scenario and/or a post-scenario description. How this can be done is further illustrated in Fig. 1C, showing a number of sub-steps to the step denoted S110, which in the following will be described in more detail. In the following, the principles for generating a pre-scenario description will be explained. It is however to be noted that the same applies in the case of generating a post-scenario description, with the difference being that the further sensor data depicts at least a portion of the surrounding environment of the vehicle at a time after a time of occurrence of the driving scenario, instead of before.

First, further sensor data depicting at least a portion of the surrounding environment of the vehicle at a time before a time of occurrence of the driving scenario can be obtained S110a. Further, a pre-scenario description can be generated S110b, based on the further sensor data. Even further, the pre-scenario description can be stored S110c together with the (previously described) scenario description. By generating a pre-scenario description and/or a post-scenario description, a time evolution of the scenario can be reflected in the generated scenario descriptions, which can provide additional information for the data-insight for ADS development. The same principles and aspects of generating S106 the scenario description, applies also to the generation S110b of the pre-scenario description and the post-scenario description. To avoid undue repetition, reference is made to the above.

The pre-scenario description, and/or the post-scenario description, may, as with the scenario description mentioned above, be stored, and transmitted to the remote server.

As readily realized by the skilled person looking at the present disclosure, the proposed technology can be implemented in a distributed manner over two of more entities. As an example, the method 100 may be implemented by a system comprising a vehicle, and a server, such as the system 400 described below. This will be further elaborated upon below.

Executable instructions for performing these functions are, optionally, included in a non-transitory computer-readable storage medium or other computer program product configured for execution by one or more processors.

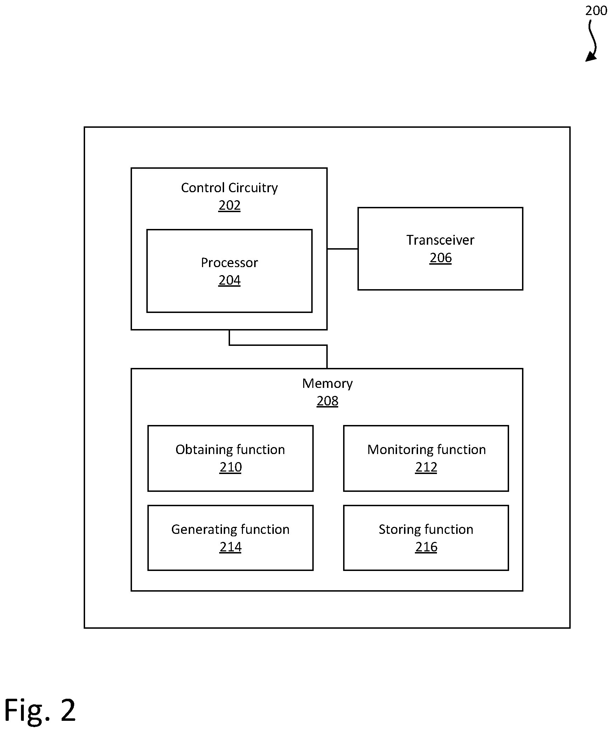

Figure 2 is a schematic illustration of a computing device 200, for providing data-insight for development of an automated driving system of a vehicle. The computing device 200 as described herein refers to any computer system, processing system or general computing device. Even though the computing device 200 is herein illustrated as one device, the computing device 200 may be a distributed computing system, formed by a number of different computational devices.

The computing device 200 comprises control circuitry 202. The control circuitry 202 may physically comprise one single circuitry device. Alternatively, the control circuitry 202 may be distributed over several circuitry devices.

As shown in the example of Fig. 2, the computing device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the computing device 200. The control circuitry 202 may include a processor 204, such as a central processing unit (CPU), microcontroller, or microprocessor. The processor 204 may be configured to execute program code stored in the memory 208, in order to carry out functions and operations of the computing device 200. The control circuitry 202 is configured to perform the steps of the method 100 as described above in connection with Fig. 1. The steps of the method 100 may be implemented in one or more functions stored in the memory 208.

The transceiver 206 is configured to enable the computing device 200 to communicate with other entities, such as vehicles or servers. The transceiver 206 may both transmit data from and receive data to the computing device 200.

The memory 208 may be a non-transitory computer-readable storage medium. The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long-term data storage and a volatile memory that functions as system memory for the computing device 200. The memory 208 may exchange data with the circuitry 202 over the data bus. Accompanying control lines and an address bus between the memory 208 and the circuitry 202 also may be present.

Functions and operations of the computing device 200 may be implemented in the form of executable logic routines (e.g., lines of code, software programs, etc.) that are stored on a non-transitory computer readable recording medium (e.g., the memory 208) of the computing device 200 and are executed by the circuitry 202 (e.g., using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the computing device 200 is described.

The control circuitry 202 is configured to obtain sensor data pertaining to a driving scenario. Said sensor data being captured by one or more sensors of the vehicle and depicting at least part of a surrounding environment of the vehicle. This may e.g. be performed by execution of an obtaining function 210.

The control circuitry 202 is further configured to monitor a fulfillment of one or more scenario triggers of the driving scenario. Fulfillment of the one or more scenario triggers being indicative of the driving scenario being a driving scenario of interest. This may e.g. be performed by execution of a monitoring function 212.

The control circuitry 202 is further configured to, in response to determining at least one of the one or more scenario triggers being fulfilled, generate, by a description generator network, a scenario description, based at least on the obtained sensor data pertaining to said driving scenario and/or based on ADS data outputted from the ADS having processed said sensor data. The scenario description comprising textual data about the driving scenario to which the obtained sensor data pertains. This may e.g. be performed by execution of a generating function 214.

The control circuitry 202 is further configured to store the generated scenario description. This may e.g. be performed by execution of a storing function 216.

It should be noted that the principles, features, aspects, and advantages of the method 100 as described above in connection with Fig. 1, are applicable also to the computing device 200 as described herein. In order to avoid undue repetition, reference is made to the above.

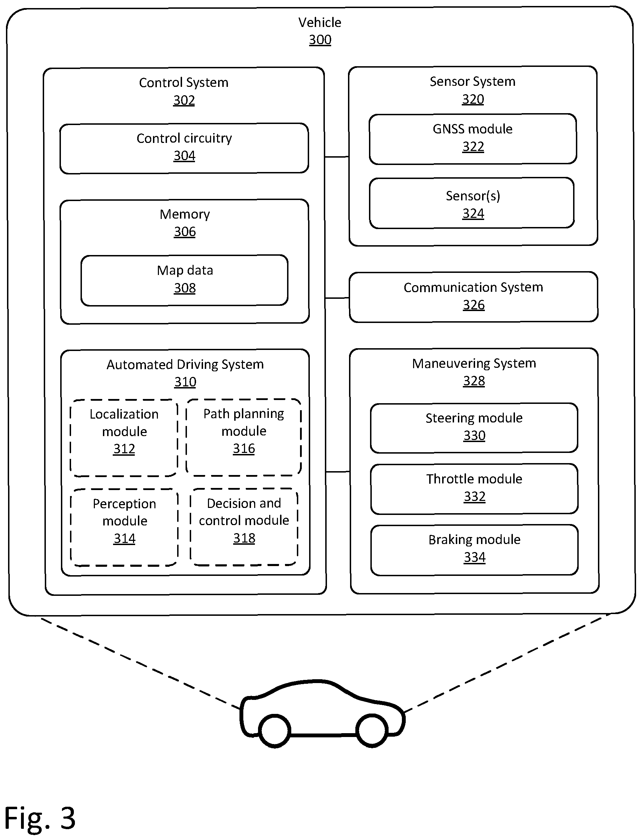

Figure 3 is a schematic illustration of a vehicle 300 in accordance with some embodiments. The vehicle 300 is equipped with an Automated Driving System (ADS) 310. As used herein, a "vehicle" is any form of motorized transport. For example, the vehicle 300 may be any road vehicle such as a car (as illustrated herein), a motorcycle, a (cargo) truck, a bus, a smart bicycle, etc.

The herein disclosed vehicle 300 is configured to perform the method 100 as described above in connection with Fig. 1. This may e.g. be performed by control circuitry 304 of the vehicle (further described below). Seen differently, the vehicle 300 may comprise the computing device 200 as described above in connection with Fig. 2. The computing device 200 may be integrated in the vehicle, e.g. as part of the control system 302 of the vehicle. The computing device 200 may share its control circuitry 202 with the control circuitry 304 of the vehicle 300.

The vehicle 300 comprises a number of elements which can be commonly found in autonomous or semi-autonomous vehicles. It will be understood that the vehicle 300 can have any combination of the various elements shown in Fig. 3. Moreover, the vehicle 300 may comprise further elements than those shown in Fig. 3. While the various elements are herein shown as located inside the vehicle 300, one or more of the elements can be located externally to the vehicle 300. Further, even though the various elements are herein depicted in a certain arrangement, the various elements may also be implemented in different arrangements, as readily understood by the skilled person. It should be further noted that the various elements may be communicatively connected to each other in any suitable way. The vehicle 300 of Fig. 3 should be seen merely as an illustrative example, as the elements of the vehicle 300 can be realized in several different ways.

The vehicle 300 comprises a control system 302. The control system 302 is configured to carry out overall control of functions and operations of the vehicle 300. The control system 302 comprises control circuitry 304 and a memory 306. The control circuitry 302 may physically comprise one single circuitry device. Alternatively, the control circuitry 302 may be distributed over several circuitry devices. As an example, the control system 302 may share its control circuitry 304 with other parts of the vehicle. The control circuitry 302 may comprise one or more processors, such as a central processing unit (CPU), microcontroller, or microprocessor. The one or more processors may be configured to execute program code stored in the memory 306, in order to carry out functions and operations of the vehicle 300. The processor(s) may be or include any number of hardware components for conducting data or signal processing or for executing computer code stored in the memory 306. In some embodiments, the control circuitry 304, or some functions thereof, may be implemented on one or more so-called system-on-a-chips (SoC). As an example, the ADS 310 may be implemented on a SoC. The memory 306 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 306 may include database components, object code components, script components, or any other type of information structure for supporting the various activities of the present description.

In the illustrated example, the memory 306 further stores map data 308. The map data 308 may for instance be used by the ADS 310 of the vehicle 300 in order to perform autonomous functions of the vehicle 300. The map data 308 may comprise high-definition (HD) map data. It is contemplated that the memory 308, even though illustrated as a separate element from the ADS 310, may be provided as an integral element of the ADS 310. In other words, according to some embodiments, any distributed or local memory device may be utilized in the realization of the present inventive concept. Similarly, the control circuitry 304 may be distributed e.g. such that one or more processors of the control circuitry 304 is provided as integral elements of the ADS 310 or any other system of the vehicle 300. In other words, according to an exemplary embodiment, any distributed or local control circuitry device may be utilized in the realization of the present inventive concept.

The vehicle 300 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 300. The sensor system 320 may further comprise one or more sensors 324. The one or more sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 300.

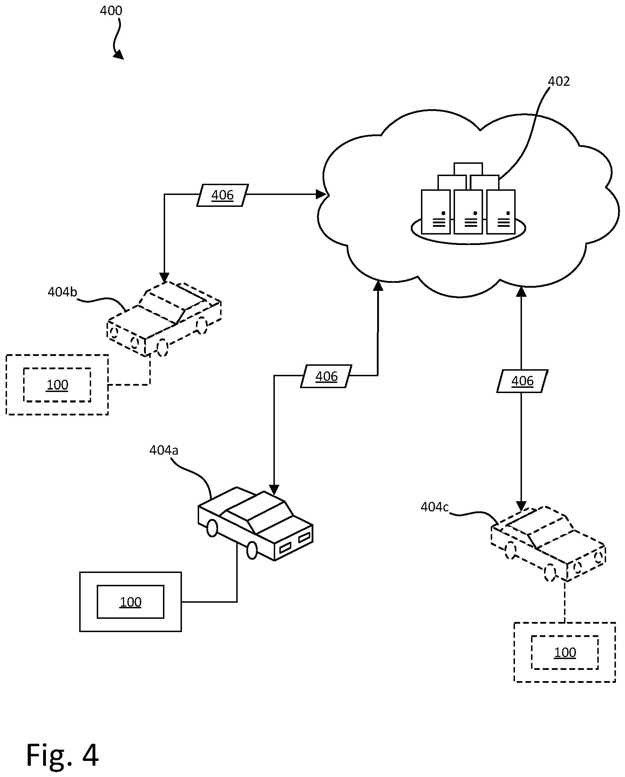

The vehicle 300 further comprises a communication system 326. The communication system 326 is configured to communicate with external units, such as other vehicles (i.e. via vehicle-to-vehicle (V2V) communication protocols), remote servers (e.g. cloud servers, as shown above in connection with Fig. 4), databases or other external devices, i.e. vehicle-to-infrastructure (V2I) or vehicle-to-everything (V2X) communication protocols. The communication system 326 may communicate using one or more communication technologies. The communication system 326 may comprise one or more antennas. Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short-range communication technologies may be used such as Wireless Local Area (LAN), e.g. IEEE 802.11 based solutions, for communicating with other vehicles in the vicinity of the vehicle 300 or with local infrastructure elements. ETSI is working on cellular standards for vehicle communication and for instance 5G is considered as a suitable solution due to the low latency and efficient handling of high bandwidths and communication channels.

The communication system 326 may further provide the possibility to send output to a remote location (e.g. remote operator or control center) by means of the one or more antennas. Moreover, the communication system 326 may be further configured to allow the various elements of the vehicle 300 to communicate with each other. As an example, the communication system may provide a local network setup, such as CAN bus, 12C, Ethernet, optical fibers, and so on. Local communication within the vehicle may also be of a wireless type with protocols such as WiFi, LoRa, Zigbee, Bluetooth, or similar mid/short range technologies.

The vehicle 300 further comprises a maneuvering system 320. The maneuvering system 328 is configured to control the maneuvering of the vehicle 300. The maneuvering system 328 comprises a steering module 330 configured to control the heading of the vehicle 300. The maneuvering system 328 further comprises a throttle module 332 configured to control actuation of the throttle of the vehicle 300. The maneuvering system 328 further comprises a braking module 334 configured to control actuation of the brakes of the vehicle 300. The various modules of the steering system 328 may receive manual input from a driver of the vehicle 300 (i.e. from a steering wheel, a gas pedal and a brake pedal respectively). However, the maneuvering system 328 may be communicatively connected to the ADS 310 of the vehicle, to receive instructions on how the various modules should act. Thus, the ADS 310 can control the maneuvering of the vehicle 300.

As stated above, the vehicle 300 comprises an ADS 310. The ADS 310 may be part of the control system 302 of the vehicle. The ADS 310 is configured to carry out the functions and operations of the autonomous functions of the vehicle 300. The ADS 310 can comprise a number of modules, where each module is tasked with different functions of the ADS 310.

The ADS 310 may comprise a localization module 312 or localization block/system. The localization module 312 is configured to determine and/or monitor a geographical position and heading of the vehicle 300, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system. The perception module 314 may refer to any commonly known module and/or functionality, e.g. comprised in one or more electronic control modules and/or nodes of the vehicle 300, adapted and/or configured to interpret sensory data - relevant for driving of the vehicle 300 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

An object detection model for detecting and/or classifying object in the surrounding environment of the vehicle 300 (or other types of machine learning models) may be part of the ADS 310, or more specifically part of the perception module 314. Such models may be a local copy of a global model managed by a remote (of fleet) server, i.e. as part of a federated learning scheme.

The localization module 312 and/or the perception module 314 may be communicatively connected to the sensor system 320 in order to receive sensor data from the sensor system 320. The localization module 312 and/or the perception module 314 may further transmit control instructions to the sensor system 320.

The ADS may further comprise a path planning module 316. The path planning module 316 is configured to determine a planned path of the vehicle 300 based on a perception and location of the vehicle as determined by the perception module 314 and the localization module 312 respectively. A planned path determined by the path planning module 316 may be sent to the maneuvering system 328 for execution.

The ADS may further comprise a decision and control module 318. The decision and control module 318 is configured to perform the control and make decisions of the ADS 310. For example, the decision and control module 318 may decide on whether the planned path determined by the path-planning module 316 should be executed or not.

It should be understood that parts of the described solution may be implemented either in the vehicle 300, in a system located external to the vehicle, or in a combination of internal and external to the vehicle; for instance, in a server in communication with the vehicle, a so-called cloud solution, as is further explained below in connection with Fig. 4. The different features and steps of the embodiments may be combined in other combinations than those described. Further, the elements of the vehicle 300 (i.e. the systems and modules) may be implemented in different combinations than those described herein.

Figure 4 illustrates, by way of example, a system 400 according to some embodiments. More specifically, a system 400 being configured to implement the principles of the presently disclosed technology. The system 400 should therefore be seen as a non-limiting example of a realization of the herein disclosed aspects of the present technology. For instance, the system 400 may be configured to perform the method 100 described above in connection with Fig. 1. Thus, any features or principles described above in connection with Fig. 1 are applicable also to the system 400 as described herein, and vice versa, unless otherwise stated.

The system 400 comprises a server 402 (or remote, cloud, central, back-office, fleet, or back-end server), referred to in the following as the remote server 402 or just server 402. As illustrated, the server 402 may be provided in the cloud, i.e. as a cloud-implemented server. Advantageously, the server 402 may perform more computational heavy tasks, or manage and coordinate the fleet of vehicles (further described below), such as aggregating data from, or distributing data to, the different vehicles of the fleet, updating ADS functions and distributing the updates to the fleet, etc.

The system 400 further comprises one or more vehicles 404a-c, also referred to as a fleet of vehicles 404a-c. The one or more vehicles 404a-c may be vehicles 300 as described above in connection with Fig. 3. Thus, the one or more vehicles 404a-c may be configured to perform the method 100 described above in connection with Fig. 1. Thus, any principles and aspects described above in connection with Fig. 1 apply also to the vehicles 404a-c of the fleet of vehicles. The fleet illustrated in Fig. 4 comprises three vehicles, a first, second and third vehicle 404a-c, by way of example. The system 400 may however comprise any number of vehicles 404a-c. In the following, reference will mainly be made to the first vehicle 404a, however the same aspects apply also to the other vehicles of the fleet of vehicles.

The one or more vehicles 404a-c are communicatively connected to the remote server 402. This may provide for transmitting and/or receiving data 406 between the vehicles and the server. The one or more vehicles 404a-c may be further communicatively connected to each other. The data 406 may be any kind of data, such as communication signals, sensor data, scenario description, sensor data embeddings, ADS data embeddings etc. The communication may be performed by any suitable wireless communication protocol. The wireless communication protocol may e.g. be long range communication protocols, such as cellular communication technologies (e.g. GSM, GPRS, EDGE, LTE, 5G, 5G NR, etc.) or short to mid-ranged communication protocols, such as Wireless Local Area Network (WLAN) (e.g. IEEE 802.11) based solutions. The sever 402 comprises a suitable memory and control circuitry, for example, one or more processors or processing circuitry, as well as one or more other components such as a data interface and transceiver. The server 402 may also include software modules or other components, such that the control circuity can be configured to execute machine-readable instructions loaded from memory to implement the steps of the method to be performed.

As mentioned above, each vehicle of the one or more vehicles 404a-c may be configured to perform the method 100, as described above in connection with Fig. 1. How the server 402 may be involved in this process will be further explained in the following. While only a few examples of the implementation are given, it is to be appreciated that these examples should not be seen as limiting, as several different ways of implementation may be possible, depending on a specific realization. Also, further details regarding the different steps, reference is made to Fig. 1 above, in order to avoid undue repetition. When stated e.g. "vehicle is configured to ...", or "server configured to ...", it is herein meant that control circuitry of the vehicle/server is configured to perform the described function.

The vehicle 404a is configured to obtained sensor data pertaining to a driving scenario, said sensor data being captured by the one or more sensors 324 of the vehicle 404a and depicting at least part of a surrounding environment of the vehicle 404a.

The vehicle 404a is further configured to monitor a fulfillment of one or more scenario triggers of the driving scenario, wherein fulfillment of the one or more scenario triggers is indicative of the driving scenario being a driving scenario of interest.

In some embodiments, the vehicle 404a is further configured to, in response to determining at least one of the one or more scenario triggers being fulfilled, generate, by a description generator network, a scenario description based at least on the obtained sensor data pertaining to said driving scenario and/or based on ADS data outputted from the ADS having processed said sensor data. The scenario description comprising textual data about the driving scenario to which the obtained sensor data pertains. In such case, the vehicle is further configured to transmit the generated scenario description to the server 402. The server 402 in turn is configured to receive, and store, the scenario description. The scenario description can then be used for further development of the ADS, performed in the server.

As mentioned above, the generation of the scenario description may be performed by generating embeddings associated with the obtained sensor data (or the ADS data outputted from the ADS having processed the sensor data). In such case, the part of generating the embeddings may be performed by the vehicle 404a. However, the part of generating the scenario description by inputting the embeddings to the description generator network may either be performed by the vehicle 404a, or by the server 402. As a first option, the vehicle 404a may transmit the finished scenario description to the server 402 (in line with what is described in connection with Fig. 1). Alternatively, as a second option, the vehicle 404a may transmit the generated embeddings to the server 402, for subsequent generation of the scenario description in the server 402. The server 402 may thus be configured to generate the scenario description by inputting the received embeddings into the description generator network. The second option may still provide for the advantages in terms of data bandwidth (since the embeddings are a compressed representation of the original data), and in terms of data privacy (since any sensitive information may be supressed by embedding the original data), while also enabling the use of larger model sizes of the description generator network (e.g. in terms or more complex and larger architecture). The first option can still leverage distilled or quantized versions of the description generator network, while offering other advantages associated with edge computing.

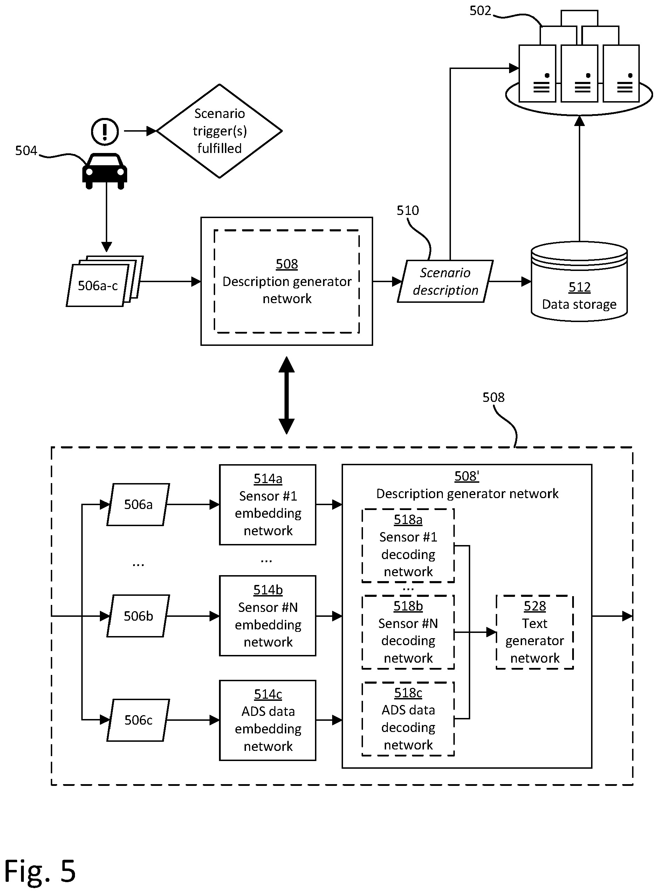

Fig. 5 illustrates, by way of example, a process flowchart on a system level of the disclosed technology, in accordance with some embodiments. The process flowchart illustrated herein can be seen as an alternative representation of the system 400 described above in connection with Fig. 4. Thus, any aspects or principles of the system 400 apply also to the process in Fig. 5, and vice versa. In order to better elucidate the herein disclosed embodiments, the process flowchart is represented as various "modules" or blocks in Fig. 5, each of them linked to one or more specific functions of the systems. In more detail, Fig. 5 depicts the data flow within the system (i.e. between a vehicle 504 and a server 502).

A scenario trigger monitoring is implemented in the vehicle 504 for detecting when a driving scenario of interest occurs. One or more sensors of the vehicle 504 provides sensor data 506a, 506b pertaining to the driving scenario. More specifically, the sensor data 506a, 506b depicts the surrounding environment of the vehicle 504. The sensor data 506a-c may be of one or more sensor data types. As illustrated herein, the vehicle sensors(s) may provide sensor data of 1 to N different sensor data types, including e.g. image data from one or more cameras, lidar data, radar data, ultrasonic data, etc. Other forms of data (commonly referred to as meta data) may include vehicle state information 12, data stream quality and availability, and vehicle information and data. Even through the sensor data are illustrated as being provided directly from the vehicle sensor(s), the sensor data may be temporarily stored or "buffered" in a suitable data buffer. The vehicle 504 may further provide other types of data, such as ADS data 506c obtained through processing of the sensor data through the ADS of the vehicle 504.

The sensor data 506a, 506b, and/or the ADS data 506c (as well as other data) are then fed to a description generator network 508 configured to generate the scenario description 510, based on the inputted data. The scenario description 510 may then be stored in a data storage 512 (e.g. a storage medium or a database) and later transmitted to the server 502, or, the scenario description 510 can be directly transmitted to the server 502, as depicted by the two possible data flows.

In the lower part of Fig. 5, details of the description generator network 508 are shown, by way of example. Generating the scenario description 510 may involve feeding the input data through a number of embedding networks, thereby generating one or more embeddings of the input data. The one or more embeddings can then be fed through the description generator network 508' trained to process embeddings and to output a corresponding scenario description.

Herein, the one or more embedding networks comprises one sensor embedding network 514a, 514b per sensor data type. For example, the one or more embedding networks may comprise one embedding network for a first camera of the vehicle, one embedding network for a second camera of the vehicle, one embedding network for a lidar of the vehicle, and so forth. Sensor data embeddings can then be generated by processing each sensor data sample 506a, 506b through the corresponding sensor data embedding network 514a, 514b that have been trained to process sensor data and to output a corresponding sensor data embedding for each sensor data type in a multi-dimensional space. Furthermore, the one or more embedding networks may comprise additional embedding networks for other data types, such as an ADS data embedding network 514c for processing the ADS data 506c, and to generate a corresponding ADS data embedding. It is however to be appreciated that embedding networks configured to process more than one type of data can be used. For example, a fused sensor data embedding network can be used to generate a sensor data embedding from sensor data of two or more sensor data types as input.

As explained above, the description generator network 508' may be configured to generate the scenario description 510 based on one or more embeddings as input.

In some embodiments, the description generator network 508' is trained in association with the one or more embedding networks 514a-514c so as to relate to the same multi-dimensional space. The description generator network 508' may then generate the scenario description by extracting the contextual, spatial or temporal meaning of the one or more embeddings from their respective position within the multi-dimensional space. In case of a plurality of embeddings being fed to the description generator network, an aggregated position based on the plurality of embeddings may be used. Thus, the one or more embedding networks 514a-c and the description generator network 508' can be seen as an encoding-decoder pair.

More specifically, the description generator network 508' may, in some embodiments, comprise one or more decoding networks 518a-518c for decoding the embeddings. The output of the one or more decoding networks 518a-518c may then be fed to a common text generator network 528, configured to generate the scenario description. The description generator network 508' may comprise one decoding network for each embedding network used to generate the one or more embeddings. The one or more decoding networks 518a-518c may be trained in association with the one or more embeddings network 514a-c so as to relate to the same multi-dimensional space. More specifically, the sensor #1 decoding network 518a may be trained in association with sensor #1 embedding network 514a. The sensor #N decoding network 518b may be trained in association with sensor #N embedding network 514b. The ADS data decoding network 518c may be trained in association with the ADS data embedding network 514c.

The present invention has been presented above with reference to specific embodiments. However, other embodiments than the above described are possible and within the scope of the invention. Different method steps than those described above, performing the methods by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

It should be noted that any reference signs do not limit the scope of the claims, that the invention may be at least in part implemented by means of both hardware and software, and that the same item of hardware may represent several "means" or "units".

## Claims

1. A computer-implemented method (100) for providing data-insight for development of an automated driving system, ADS, of a vehicle, the method (100) comprising:
obtaining (S102) sensor data pertaining to a driving scenario, said sensor data being captured by one or more sensors of the vehicle and depicting at least part of a surrounding environment of the vehicle;
monitoring (S104) a fulfillment of one or more scenario triggers of the driving scenario, wherein fulfillment of the one or more scenario triggers is indicative of the driving scenario being a driving scenario of interest;
in response to determining at least one of the one or more scenario triggers being fulfilled:
generating (S106), by a description generator network, a scenario description, based at least on the obtained sensor data pertaining to said driving scenario and/or based on ADS data outputted from the ADS having processed said sensor data, wherein the scenario description comprises textual data about the driving scenario to which the obtained sensor data pertains; and
storing (S108) the generated scenario description.

2. The method (100) according to claim 1, wherein generating (S106) the scenario description comprises:
generating (S106a) one or more sensor data embeddings for the obtained sensor data pertaining to said driving scenario, wherein the sensor data embeddings are generated by processing the sensor data through one or more sensor data embedding networks that have been trained to process sensor data and to output a corresponding sensor data embedding in a multi-dimensional space; and
inputting (S107a) the one or more sensor data embeddings to the description generator network having been trained to process sensor data embeddings and output a corresponding scenario description for the driving scenario to which the sensor data pertains, wherein the description generator network has been trained in association with at least one of the one or more sensor data embedding networks so as to relate to the same multi-dimensional space.

3. The method (100) according to claim 2, wherein the one or more sensor data embedding networks comprise a plurality of sensor data embedding networks including one sensor data embedding network for a corresponding sensor data type of the vehicle,
wherein the plurality of sensor data embedding networks comprises a first sensor data embedding network trained to process a first sensor data type and to output a corresponding sensor data embedding, and a second sensor data embedding network trained to process a second sensor data type and to output a corresponding sensor data embedding, and
wherein the first sensor data embedding network has been trained in association with the second sensor data embedding network such that a sensor embedding generated by the first sensor data embedding network and a sensor embedding generated by the second sensor data embedding network point towards the same point within the multi-dimensional space when the two-sensor data embeddings are contextually, spatially and/or temporally related.

4. The method (100) according to claim 2 or 3, wherein the one or more sensor data embedding networks comprise a fused sensor data embedding network trained to process fused sensor data, wherein the fused sensor data comprises a fusion of at least two sensor data types.

5. The method (100) according to any one of the claims 2 to 4, wherein generating (S106) the scenario description further comprises:
generating (S106c) one or more trigger embeddings for the at least one scenario trigger being fulfilled, wherein the one or more trigger embeddings are generated by processing each fulfilled scenario trigger through a trigger embedding network having been trained to process scenario triggers and to output a corresponding trigger embedding in the multi-dimensional space, and wherein the trigger embedding network have been trained in association with at least one of the one or more sensor data embedding networks so as to relate to the same multi-dimensional space; and
inputting (S107c) the one or more trigger embeddings to the description generator network.

6. The method (100) according to any one of the claims 1 to 5, wherein generating (S106) the scenario description comprises:
generating (S106b) one or more ADS data embeddings from the ADS data, wherein the one or more ADS data embeddings are generated by processing the ADS data through one or more ADS data embedding networks that have been trained to process ADS data and to output a corresponding ADS data embedding in a multi-dimensional space; and
inputting (S107b) the one or more ADS data embeddings to the description generator network having been trained to process ADS data embeddings and output a corresponding scenario description for the driving scenario, wherein the description generator network has been trained in association with at least one of the one or more ADS data embedding networks so as to relate to the same multi-dimensional space.

7. The method (100) according to any one of the claims 1 to 6, further comprising transmitting (S114) the generated scenario description to a remote server.

8. The method (100) according to any one of the claims 1 to 7, wherein the sensor data comprises at least two sensor data types.

9. The method (100) according to any one of the claims 1 to 8, wherein determining the fulfilment of the one or more scenario triggers of the driving scenario is based on the sensor data depicting at least part of the surrounding environment of the vehicle.

10. The method (100) according to any one of the claims 1 to 9, wherein determining the fulfilment of the one or more scenario triggers of the driving scenario is based on one or more internal states of the vehicle at a time of occurrence of the driving scenario.

11. The method (100) according to any one of the claims 1 to 10, further comprising:
obtaining (S110a) further sensor data depicting at least a portion of the surrounding environment of the vehicle at a time before and/or after a time of occurrence of the driving scenario;
generating (S110b) a pre-scenario description and/or a post-scenario description based on the further sensor data; and
storing (S110c) the pre-scenario description and/or post-scenario description together with the scenario description.

12. A computer program product comprising instructions which, when the program is executed by a computer, causes the computer to carry out the method (100) according to any one of claims 1-11.

13. A computing device (200) for providing data-insight for development of an automated driving system of a vehicle, the computing device (200) comprising control circuitry (202) configured to:
obtain sensor data pertaining to a driving scenario, said sensor data being captured by one or more sensors of the vehicle and depicting at least part of a surrounding environment of the vehicle;
monitor a fulfillment of one or more scenario triggers of the driving scenario, wherein fulfillment of the one or more scenario triggers is indicative of the driving scenario being a driving scenario of interest;
in response to determining at least one of the one or more scenario triggers being fulfilled:
generate, by a description generator network, a scenario description, based at least on the obtained sensor data pertaining to said driving scenario and/or based on ADS data outputted from the ADS having processed said sensor data, wherein the scenario description comprises textual data about the driving scenario to which the obtained sensor data pertains; and
store the generated scenario description.

14. A vehicle (300) equipped with an automated driving system (310), the vehicle (300) comprising:
one or more sensors (324), and
the computing device (200) according to claim 13.

15. A system comprising:
a fleet of vehicles equipped with an automated driving system, ADS; and
a server communicatively connected to the fleet of vehicles;
wherein a vehicle (504a) of the fleet of vehicles comprises control circuitry configured to:
obtain sensor data pertaining to a driving scenario, said sensor data being captured by one or more sensors of the vehicle and depicting at least part of a surrounding environment of the vehicle;
monitor a fulfillment of one or more scenario triggers of the driving scenario, wherein fulfillment of the one or more scenario triggers is indicative of the driving scenario being a driving scenario of interest;
in response to determining at least one of the one or more scenario triggers being fulfilled:
generate, by a description generator network, a scenario description based at least on the obtained sensor data pertaining to said driving scenario and/or based on ADS data outputted from the ADS having processed said sensor data, wherein the scenario description comprises textual data about the driving scenario to which the obtained sensor data pertains; and
transmit the generated scenario description to the server;
wherein the server comprises control circuitry configured to:
receive the generated scenario description; and
store the generated scenario description.
